(19) Europäisches Patentamt
European Patent Office
Office européen des brevets

(11) **EP 4 542 346 A1**

(12) **DEMANDE DE BREVET EUROPEEN**

(43) Date de publication:
**23.04.2025 Bulletin 2025/17**

(21) Numéro de dépôt: **24206865.8**

(22) Date de dépôt: **16.10.2024**

(51) Classification Internationale des Brevets (IPC):
**G06F 3/01** *(2006.01)*

(52) Classification Coopérative des Brevets (CPC):
**G06F 3/016; G06F 3/017**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **17.10.2023 FR 2311179**

(71) Demandeur: **Commissariat à l'Energie Atomique et aux Energies Alternatives**
**75015 Paris (FR)**

(72) Inventeurs:
• **CASSET, Fabrice**
**38054 Grenoble Cedex 09 (FR)**
• **RASCLE, Angélique**
**38054 Grenoble Cedex 09 (FR)**
• **PRAT, Christophe**
**38054 Grenoble Cedex 09 (FR)**
• **GERFAULT, Laurent**
**38054 Grenoble Cedex 09 (FR)**
• **BRULAIS, Sébastien**
**38054 Grenoble Cedex 09 (FR)**
• **PERIS Y SABORIT, Laure**
**38054 Grenoble Cedex 09 (FR)**

(74) Mandataire: **Cabinet Nony**
**11 rue Saint-Georges**
**75009 Paris (FR)**

(54) **INTERFACE HAPTIQUE ET SONORE**

(57) Interface multimodale haptique, comportant :
- un circuit de commande (3),
- une matrice comportant une pluralité de transducteurs ultrasonores (2) reliés audit circuit, le circuit de commande étant configuré pour moduler les signaux (30) envoyés aux transducteurs (2) afin de :
- générer avec les ondes ultrasonores émises par au moins une partie des transducteurs une pression acoustique détectable tactilement en au moins une première zone focale (10), et/ou
- générer avec les ondes ultrasonores émises par au moins une partie des transducteurs une pression acoustique détectable auditivement en au moins une seconde zone focale (11).

[Fig 1A]

Figure 1A

EP 4 542 346 A1

**Description**

**Domaine technique**

La présente invention concerne les interfaces homme-machine, et plus particulièrement celles utilisant des effets haptiques et sonores.

**Technique antérieure**

Interface haptique

Une interface haptique permet à l'utilisateur d'interagir avec l'environnement par le sens du toucher. L'effet haptique est aujourd'hui de plus en plus utilisé dans de nombreuses applications, notamment pour des dispositifs de réalité virtuelle ou augmentée.

Il est connu d'utiliser une matrice de transducteurs ultrasonores excités à une fréquence supérieure à 20kHz, dite fréquence porteuse, pour générer une pluralité d'ondes ultrasonores lesquelles, non audibles, sont focalisées en jouant sur le déphasage des porteuses en une zone de l'espace prédéfinie, pour générer une pression acoustique. Cette dernière est perceptible au toucher grâce à une modulation basse fréquence de l'amplitude des porteuses.

Dans la suite, par « fréquence porteuse des transducteurs » on désigne la fréquence du signal d'excitation des transducteurs, autrement dit leur fréquence de travail, signal d'excitation qui peut être modulé en amplitude pour générer l'information haptique ou sonore que l'on cherche à transmettre.

Il est notamment connu d'actionner individuellement ou par groupe des transducteurs pour générer une impulsion (« pulse ») acoustique non audible, une électronique de pilotage étant agencée pour déphaser judicieusement l'actionnement de chaque transducteur afin de focaliser les ondes ultrasonores en un point choisi de l'espace. Cette technique de focalisation acoustique monopoint permet d'additionner les impulsions acoustiques élémentaires et donc de générer des impulsions acoustiques suffisamment fortes pour être ressenties par l'utilisateur.

Cette technologie générant un effet à distance permet par exemple une meilleure immersion dans les jeux vidéo, notamment via l'adjonction d'effets haptiques lors de l'utilisation de lunettes de réalité virtuelle (VR), réalité augmentée (AR) ou réalité mixte (MR). Elle peut également s'appliquer à la fonctionnalisation de tableaux de bord, notamment automobiles, en permettant au conducteur d'obtenir une information tactile tout en gardant son attention sur la route.

La demande US20180181203 divulgue une interface haptique permettant de générer un effet haptique sur la main d'un utilisateur grâce à une matrice de transducteurs ultrasonores dont les fréquences porteuses sont identiques, mais dont les fréquences de modulation basse fréquence sont différentes, afin de solliciter des récepteurs tactiles différents sensibles à des fréquences d'excitation différentes et créer ainsi un effet haptique multipoint.

La demande FR3092680 décrit un dispositif de réalité virtuelle comportant une monture destinée à être portée sur la tête d'un utilisateur et comportant une pluralité de transducteurs ultrasonores identiques de type piézoélectrique micro-usiné (PMUT) générant un effet haptique sur la main de l'utilisateur.

La demande FR3116630 décrit une interface haptique de type « à distance » comportant deux ensembles de transducteurs émettant à des fréquences porteuses différentes.

La demande US2018/151035 décrit un dispositif d'émission haptique de type « à distance » configuré pour émettre des signaux ultrasonores à des fréquences non audibles, afin de générer des effets tactiles sur un utilisateur sans gêner les autres personnes présentes dans son entourage immédiat.

La demande US 11347312 décrit un système comprenant une pluralité de dispositifs haptiques de type « à distance » qui peuvent être activés ou désactivés de sorte à générer des effets haptiques dans différentes zones, chaque dispositif haptique permettant de générer des effets haptiques dans l'une des zones.

Interface sonore

On connaît des haut-parleurs recevant un signal analogique et comportant une membrane qui va restituer le son à jouer en fonction de sa position et de son déplacement.

Il est également connu d'utiliser un grand nombre de petits transducteurs pour reconstruire un son à jouer par le principe de l'additivité linéaire des pressions dans l'air, comme décrit dans l'article de Dejaeger et al, "Development and characterization of a piezoelectrically actuated MEMS digital loudspeaker", Proceedings European Conférence on Sensors, Actuators and Microsystems (Eurosensor), 2012, ainsi que dans la thèse Rémy Dejaeger, Modélisations multiphysiques, réalisation et expérimentations d'un haut-parleur digital matriciel piézoélectrique MEMS, Acoustique [physics.class-ph], INSA de Lyon, 2014, Français. Dans ces documents, un certain nombre de transducteurs sont activés afin d'obtenir une impulsion de pression globale d'une certaine amplitude.

Système multimodal

Il est connu de l'état de l'art des ensembles mêlant à la fois effets haptiques et visuels, grâce à l'utilisation de systèmes séparés, les effets visuels étant par exemple générés grâce à des hologrammes ou des miroirs, et les effets haptiques par une matrice de transducteurs ultrasonores.

## Exposé de l'invention

Il demeure un besoin pour bénéficier d'une interface pouvant à la fois générer des effets haptiques « à distance » (en anglais « mid-air ») localisés et des effets sonores localisés.

## Résumé de l'invention

L'invention vise à répondre à ce besoin et elle y parvient, selon un premier de ses aspects, grâce à une interface multimodale haptique et sonore de type « à distance », comportant :

- un circuit de commande,
- une matrice comportant une pluralité de transducteurs ultrasonores reliés audit circuit,

le circuit de commande étant configuré pour moduler les signaux envoyés aux transducteurs afin de :

- générer avec les ondes ultrasonores émises par au moins une partie des transducteurs une pression acoustique détectable tactilement en au moins une première zone focale, et
- générer avec les ondes ultrasonores émises par au moins une partie des transducteurs une pression acoustique détectable auditivement en au moins une seconde zone focale.

Par « zone focale », parfois encore appelée « point focal », on désigne la zone où les ondes ultrasonores sont concentrées et génèrent une pression acoustique détectable. Cette zone focale peut être une région de l'espace plus ou moins étendue, selon le but poursuivi.

L'interface selon l'invention peut permettre de générer une pression acoustique détectable tactilement et/ou une pression acoustique détectable auditivement, par un même utilisateur.

L'interface multimodale selon l'invention peut permettre de générer la pression acoustique détectable auditivement par focalisation électronique acoustique. En particulier, le circuit de commande peut être configuré pour moduler les signaux envoyés aux transducteurs afin de générer, par focalisation électronique acoustique, la pression acoustique détectable auditivement.

L'interface selon l'invention permet d'actionner des transducteurs en introduisant un déphasage sur chaque transducteur actionné, afin de localiser spatialement un effet haptique et/ou un effet sonore.

L'invention permet de générer des effets sonores et haptiques cohérents spatialement et/ou temporellement.

L'invention permet de générer simultanément la création d'effets haptiques et sonores, grâce notamment à des fréquences de porteuse des transducteurs différentes et/ou des nombres de transducteurs actionnés différents pour les deux effets et/ou des déphasages variés entre les transducteurs.

L'invention permet aussi de générer successivement des effets haptiques et sonores avec la stimulation des mêmes transducteurs. Les deux effets successifs peuvent être perçus comme simultanés par un utilisateur si le temps qui les sépare est inférieur ou égal à quelques centaines, mieux quelques dizaines, de millisecondes, par exemple si le temps qui les sépare est inférieur ou égal à 1000 ms, voire 100 ms.

L'invention peut permettre de générer des effets haptiques ayant une résolution spatiale (taille de la tache focale) comprise entre 1 mm et 30 cm, mieux entre 2 mm et 1 cm.

L'invention peut permettre de générer des effets sonores ayant une résolution spatiale comprise entre 1 cm et 8 cm.

L'invention peut permettre, si cela est recherché, de déplacer rapidement la première zone focale afin de donner l'impression à l'utilisateur d'un objet large.

## Circuit de commande

Le circuit de commande est de préférence configuré de façon à déterminer le nombre de transducteurs à actionner pour réaliser des effets haptiques et/ou sonores souhaités, ainsi que leur position dans la matrice de transducteurs.

Le circuit de commande est de préférence configuré de façon à calculer des déphasages à introduire dans les porteuses des différentes ondes ultrasonores émises par les transducteurs actionnés, et à générer ces déphasages de façon à concentrer les ondes ultrasonores émises en des zones focales prédéfinies.

Le circuit de commande utilise notamment des algorithmes connus de l'Homme du métier afin de déterminer le nombre de transducteurs à actionner et/ou leur position et/ou afin de calculer les déphasages à introduire dans les porteuses des différentes ondes ultrasonores émises par les transducteurs actionnés. Un tel exemple d'algorithme connu de l'Homme du métier est décrit dans l'article Hudin C, Lozada J, Hayward V., Localized Tactile Feedback on a Transparent Surface through Time-Reversal Wave Focusing, IEEE Trans Haptics, 2015 Apr-Jun;8(2):188-98.

Le circuit de commande peut recevoir des données d'un équipement définissant le(s) effet(s) haptique(s) et/ou sonore(s) à générer, en fonction par exemple de la position de la main et/ou de l'oreille de la personne à laquelle cet ou ces effet(s) est(sont) destiné(s), relativement aux transducteurs. Le circuit de commande peut être configuré de manière à déterminer quels transducteurs actionner et les signaux à envoyer avec ceux-ci selon le(s) effet(s) haptique(s) et/ou sonore(s) désiré(s).

## Interface multimodale

L'interface peut comporter au moins un ensemble de transducteurs agencé pour générer des effets haptiques et des effets sonores.

L'interface peut comporter au moins deux ensembles de transducteurs ultrasonores, notamment en avoir exactement deux.

Un premier ensemble de transducteurs peut être agencé pour générer des effets haptiques et un deuxième ensemble de transducteurs peut être agencé pour générer des effets sonores simultanément et/ou successivement aux effets haptiques générés par le premier ensemble, notamment un premier ensemble de transducteurs peut être agencé avec le circuit de commande pour générer des effets haptiques et un deuxième ensemble de transducteurs non inclus dans le premier peut être agencé pour générer avec le circuit de commande des effets sonores simultanément et/ou successivement aux effets haptiques générés par le premier ensemble. Par exemple, les effets haptiques générés par le premier ensemble sont générés sur une surface d'un utilisateur, telle que l'un de ses mains ou de ses doigts et les effets sonores générés par le deuxième ensemble sont générés pour être perçus par un récepteur auditif de cet utilisateur, tel que l'une de ses oreilles.

De préférence, l'un d'un premier et d'un deuxième ensemble de transducteurs est au moins en partie, mieux totalement, inclus dans l'autre du premier et du deuxième ensemble de transducteurs.

Les deux ensembles de transducteurs peuvent comporter des nombres différents de transducteurs.

Un premier ensemble peut comporter entre 100 et 200 transducteurs.

Un deuxième ensemble peut comporter entre 200 et 500 transducteurs.

Les transducteurs d'un premier ensemble et ceux d'un deuxième ensemble peuvent avoir des membranes actives identiques. Les transducteurs d'un premier ensemble et ceux d'un deuxième ensemble peuvent avoir des membranes actives de tailles différentes, de préférence réalisées de manière identique.

Les transducteurs d'un premier et d'un deuxième ensemble peuvent fonctionner avec des fréquences de porteuse identiques. En variante, les transducteurs d'un premier et d'un deuxième ensemble peuvent fonctionner avec des fréquences de porteuse différentes.

Les transducteurs peuvent être agencés pour fonctionner à des porteuses différentes de plusieurs façons. Pour un transducteur donné, la fréquence de la porteuse peut correspondre à la fréquence de résonance du transducteur. On peut jouer par exemple sur la taille des transducteurs ou sur les matériaux employés, ces deux paramètres ayant une action sur la fréquence de résonance. Par exemple, les transducteurs d'un premier ensemble et ceux d'un deuxième ensemble ont des membranes actives de tailles différentes, de préférence réalisées de manière identique, notamment avec le ou les mêmes matériaux. Cela simplifie la réalisation des transducteurs, en permettant si on le souhaite de réaliser simultanément, par exemple sur un même support, une pluralité de transducteurs dont certains avec une taille de membrane donnée et d'autres avec une taille différente. Les transducteurs ayant la membrane active la plus grande peuvent émettre à la fréquence de porteuse la plus basse.

Les transducteurs d'un premier ensemble et ceux d'un deuxième ensemble peuvent être modulés en amplitude à une basse fréquence identique, ou en variante à des fréquences différentes.

La basse fréquence de modulation des porteuses est de préférence comprise entre 10 Hz et 5kHz, mieux entre 50Hz et 500Hz.

Les transducteurs d'un premier ensemble peuvent être regroupés selon un ou plusieurs sous-ensembles, de même que ceux d'un deuxième ensemble.

Les transducteurs d'un premier ensemble et ceux d'un deuxième ensemble sont de préférence portés par un même support. Ce support peut être rigide ou flexible, et prendre par exemple des configurations variées, notamment concave ou convexe, en fonction des effets recherchés.

De préférence, la première zone focale est différente de la seconde. Les zones focales peuvent être localisées à des endroits différents dans l'espace et/ou être de tailles différentes. Par exemple, les zones focales peuvent être localisées à des endroits différents d'un même utilisateur.

L'interface peut comporter plusieurs, notamment deux ou trois, ensembles de transducteurs agencés pour créer simultanément des effets haptiques à des positions spatiales différentes.

## Système de détection

L'interface peut comporter au moins un système de détection configuré pour détecter la position relativement aux transducteurs d'au moins une surface à stimuler tactilement, et/ou d'au moins un récepteur auditif à stimuler sonorement.

Le circuit de commande peut être agencé pour contrôler les transducteurs, notamment la position des première et deuxième zones focales, en fonction de la position de la surface et/ou du récepteur auditif.

Le système de détection peut utiliser pour cette détection au moins une partie des transducteurs ultrasonores, en analysant le signal retour réfléchi sur l'utilisateur, à la manière d'un sonar. Le système de détection peut aussi utiliser tout autre système, par exemple optique ou capacitif, adapté à cette détection.

Le système de détection peut être utilisé, le cas échéant, pour permettre à l'interface de passer d'un état de veille à un état actif, ou inversement.

## Transducteurs

Chaque transducteur peut être de tout type, piézoélectrique, ferroélectrique, électromagnétique, thermique. Pour les transducteurs piézoélectriques, les matériaux peuvent être déposés en couches minces ou mis en forme à partir de matériaux piézoélectriques céramiques. De préférence, le transducteur est de type piézoélectrique, notamment de type piézoélectrique micro-usiné (PMUT), ce type de transducteur convenant à la réalisation simultanée d'un grand nombre de transducteurs.

Les transducteurs émettent par exemple dans une gamme de fréquence porteuse 20 kHz-150 kHz, et plus généralement toute gamme de fréquence supérieure à la gamme audible.

Les transducteurs peuvent être de dimension comprise entre 50 $\mu$m et 5000 $\mu$m, notamment entre 150 $\mu$m et 1000 $\mu$m.

## Répartition des transducteurs

L'écartement entre les transducteurs peut être compris entre 10 $\mu$m et 10000 $\mu$m, mieux entre 100 $\mu$m et 500 $\mu$m. Cet écartement est suffisant pour avoir une interface suffisamment rigide pour être fabriquée.

Dans un exemple, les ensembles de transducteurs sont disposés suivant une répartition généralement imbriquée par ordre de hauteur de fréquence de porteuse. Par exemple, les transducteurs sont disposés selon un agencement généralement concentrique par ordre de taille des membranes actives, l'ensemble présentant la plus petite membrane active, c'est-à-dire émettant à la fréquence la plus élevée, étant par exemple situé au centre. D'autres agencements sont possibles, par exemple une alternance d'ensembles de transducteurs de fréquences de porteuse différentes dans une ou deux directions, ou des ensembles de transducteurs situés à des niveaux différents, ou pointant dans des directions différentes.

## Utilisation

L'interface selon l'invention peut être utilisée dans des applications telles que les casques et les lunettes à réalité virtuelle, réalité mixte ou réalité augmentée.

## Procédé

L'invention a encore pour objet un procédé pour générer au moins une ou des perception(s) tactile(s) et/ou sonore localisée(s) à distance en utilisant une interface multimodale telle que définie précédemment, comportant la modulation, grâce à un circuit de commande, des signaux de commande envoyés aux transducteurs afin de :

○ générer avec les ondes ultrasonores émises des transducteurs actionnés une pression acoustique détectable tactilement sur une surface d'un utilisateur, en une première zone focale, et/ou

○ générer avec les ondes ultrasonores émises par des transducteurs actionnés une pression acoustique détectable auditivement par un récepteur auditif de l'utilisateur, en une seconde zone focale.

Le procédé peut comporter les étapes consistant à :

- Déterminer la ou les position(s) spatiale(s) où générer la perception tactile et/ou sonore,
- Déterminer les transducteurs à actionner et calculer le déphasage à appliquer à ces transducteurs afin de générer la ou les perception(s) tactile et/ou sonore souhaitées.

La première zone focale et la seconde zone focale peuvent être en partie superposées, notamment confondues. En variante, la première zone focale et la seconde zone focale sont distinctes l'une de l'autre. De préférence, la première zone focale et la seconde zone focale sont situées sur un même utilisateur.

**Brève description des dessins**

L'invention pourra être mieux comprise à la lecture de la description détaillée qui va suivre, d'exemples de mise en oeuvre non limitatifs de celle-ci, et à l'examen des dessins annexés, sur lesquels :

[Fig 1A] la figure 1A représente de manière partielle et schématique un exemple d'interface haptique et sonore de type « mid air » selon l'invention,
[Fig 1B] la figure 1B illustre de manière schématique le principe de focalisation des ondes ultrasonores en jouant sur le déphasage,
[Fig 2] la figure 2 est une vue de dessus, partielle et schématique, d'un exemple de transducteur ultrasonore,
[Fig 3] la figure 3 représente de manière partielle et schématique un exemple de réalisation d'une matrice de transducteurs comportant des transducteurs de tailles différentes,
[Fig 4a] la figure 4a représente de manière partielle et schématique un exemple de réalisation d'un ensemble de matrices de transducteurs,
[Fig 4b] la figure 4b représente de manière partielle et schématique un autre exemple de réalisation d'un ensemble de matrices de transducteurs,
[Fig 4c] la figure 4c représente de manière partielle et schématique un autre exemple de réalisation d'un ensemble de matrices de transducteurs,
[Fig 5] la figure 5 est une coupe partielle et schématique d'un exemple de réalisation d'un transducteur ultrasonore de type PMUT,

[Fig 6] la figure 6 est un schéma en blocs illustrant des étapes d'un exemple de procédé de fabrication d'une pluralité de transducteurs ultrasonores de type PMUT,

[Fig 7] la figure 7 est une coupe partielle et schématique illustrant la deuxième étape de la figure 6,

[Fig 8] la figure 8 est une coupe partielle et schématique de la pluralité de transducteurs de type PMUT après la troisième étape de la figure 6,

[Fig 9] la figure 9 est une coupe partielle et schématique de la pluralité de transducteurs de type PMUT de la figure 6 avant le découpage par matrice,

[Fig 10] la figure 10 est une coupe partielle et schématique illustrant un exemple de connexion électrique du transducteur de la figure 5,

[Fig 11] la figure 11 est un schéma en blocs illustrant un exemple de fonctionnement de l'interface haptique selon l'invention,

[Fig 12] la figure 12 illustre des mesures de la pression du son généré par un transducteur PMUT travaillant à une fréquence de 100 kHz et étant alimentant par une tension de 5 V, et

[Fig 13] la figure 13 illustre des mesures de la pression du son généré par une matrice de 64 transducteurs PMUT travaillant à une fréquence de 100 kHz.

**Description détaillée**

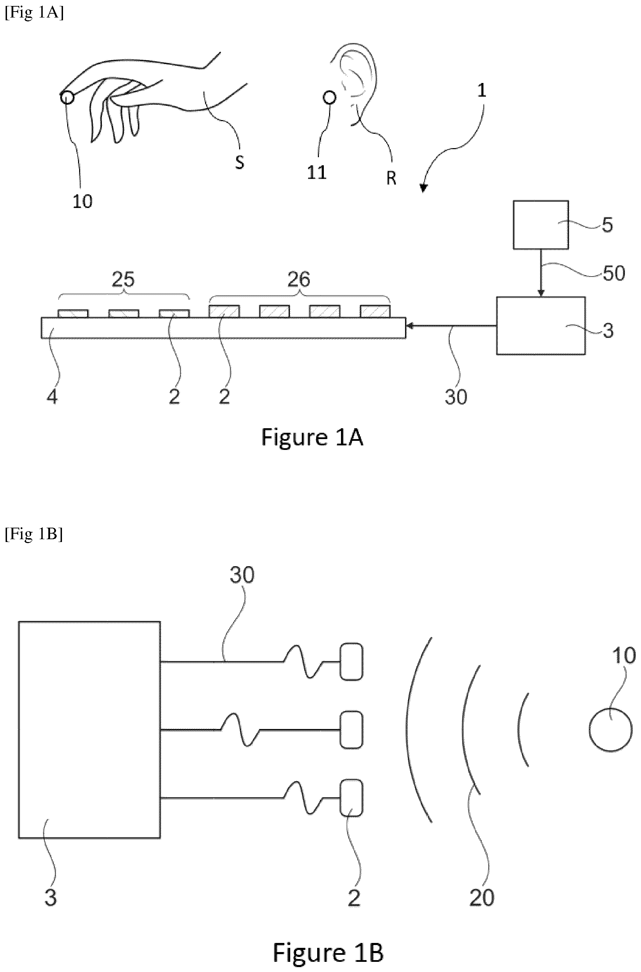

On a illustré schématiquement à la figure 1A un exemple d'interface haptique et sonore 1 selon l'invention.

L'interface 1 comprend une pluralité de transducteurs ultrasonores 2, par exemple portés par un même support 4, et un circuit de commande 3.

La pluralité de transducteurs 2 comporte un premier ensemble 25 de transducteurs émettant à une première fréquence porteuse ultrasonore et un deuxième ensemble 26 de transducteurs émettant à une seconde fréquence porteuse ultrasonore, différente de la première. En variante, et préférentiellement, les fréquences porteuses d'émission des ensembles 25 et 26 sont les mêmes.

Les ensembles 25 et 26 peuvent être distincts, comme illustré sur la figure 1A. En variante, ils sont confondus ou l'un des ensembles 25 ou 26 est inclus dans l'autre ensemble.

Le circuit de commande 3 est configuré pour moduler les signaux 30 envoyés aux transducteurs 2 afin de générer avec les ondes ultrasonores émises par le premier ensemble de transducteurs une pression acoustique détectable tactilement sur une surface S, définie par exemple par la paume et/ou les doigts d'une main, en une première zone focale 10, et/ou avec les ondes ultrasonores émises par le second ensemble de transducteurs une pression acoustique détectable auditivement par un récepteur auditif R, défini par exemple par une oreille, en une seconde zone focale 11. La figure 1A est schématique, et dans la pratique, cette seconde zone focale 11 n'est pas sur l'oreille mais dans l'espace autour de l'utilisateur, idéalement à proximité de l'oreille pour assurer que l'on puisse entendre malgré les pressions acoustiques limitées. Chaque zone focale présente des caractéristiques spatiales dépendant notamment de la fréquence de porteuse de l'ensemble de transducteurs à l'origine de la pression acoustique correspondante.

Les zones focales 10 et 11 peuvent être localisées à des endroits distincts de l'espace ou se recouper au moins partiellement. Elles peuvent être de tailles différentes ou non.

Les pressions acoustiques détectables tactilement par l'utilisateur sont générées par les transducteurs suivant un principe dit de « focalisation électronique acoustique », connu de l'art antérieur, illustré de manière schématique à la figure 1B.

La figure 1B illustre la concentration des ondes ultrasonores 20 émises par les transducteurs 2 d'un même ensemble de transducteurs en une zone focale 10 prédéfinie. Le circuit de commande 3 envoie de façon connue en soi aux transducteurs 2 des signaux alternatifs complexes 30 afin d'introduire des déphasages entre les différentes ondes ultrasonores émises par les transducteurs 2 actionnés, générant ainsi la forme de front d'onde voulue, cette forme de front d'onde résultant en une augmentation de la pression acoustique dans la zone focale 10.

Les pressions acoustiques détectables sonorement par l'utilisateur sont générées par les transducteurs également suivant le principe de focalisation électronique acoustique, comme décrit dans l'article de Dejeager et al mentionné dans l'introduction.

Dans l'exemple considéré, l'interface 1 comporte en outre un système de détection 5 configuré pour détecter la position de la surface S de l'utilisateur à stimuler tactilement et celle du récepteur R de cet utilisateur à stimuler sonorement. Le système de détection 5 est configuré pour transmettre des données de localisation correspondantes 50 au circuit de commande 3. L'interface 1 est dite de type « mid-air » car la surface S à stimuler tactilement et le récepteur R à stimuler sonorement se situent à distance des transducteurs 2, et les zones focales 10 et 11 se situent dans l'air à distance des transducteurs, étant visuellement invisibles par l'utilisateur.

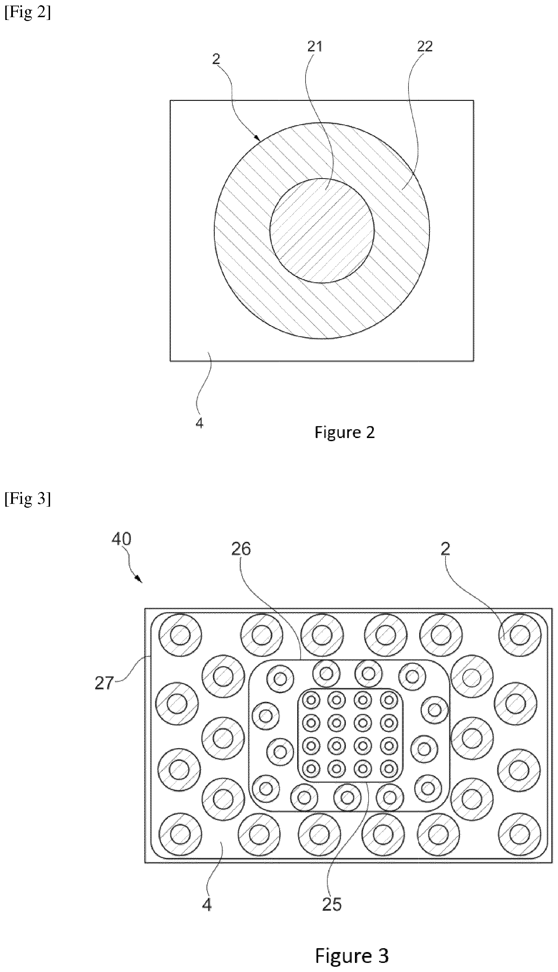

On a représenté à la figure 2 un exemple de transducteur 2 porté par un support 4. Le transducteur 2 comporte par exemple un actionneur piézolélectrique 21 et une membrane active 22 mise en vibration par l'actionneur 21.

Dans l'exemple considéré, la membrane active 22 est de forme circulaire. Dans d'autres modes de réalisation, la membrane active 22 est de forme non circulaire, par exemple polygonale, notamment carrée, rectangle, ou tout autre forme appropriée, 2D ou 3D, la membrane pouvant être de forme convexe ou concave. Le rayon de l'actionneur piézoélectrique 21 est par exemple de l'ordre de 50% du rayon de la membrane active 21, ce ratio étant avantageux pour une bonne déformation de la membrane, comme décrit dans l'article de Casset, F., et al. "Piezoelectric membrane actuator design." (2011 12th Intl. Conf. on Thermal, Mechanical & Multi-Physics Simulation and Experiments in Microelectronics and Microsystems. IEEE, 2011).

Au sein de chaque ensemble de transducteurs, ces derniers sont identiques et émettent par conséquent à la même fréquence de porteuse. D'un ensemble à l'autre, les transducteurs 2 diffèrent par exemple dans leur dimension, chaque dimension correspondant à une fréquence de porteuse respective. La membrane active 22 des transducteurs 2 varie par exemple en épaisseur et/ou en rayon, de préférence en rayon, d'un ensemble à l'autre.

Les transducteurs des différents ensembles de l'interface selon l'invention peuvent être disposés au sein d'une ou plusieurs matrices 40. Par « matrice », on désigne une structure d'un seul tenant portant plusieurs transducteurs, identiques ou non. Une matrice peut comporter des transducteurs qui ont été réalisés simultanément, comme détaillé plus loin.

On a représenté à la figure 3 une matrice 40 de transducteurs ultrasonores 2 comportant trois ensembles 25, 26 et 27 de transducteurs de tailles respectives différentes, les transducteurs 2 étant disposés sur le support 4 en suivant par exemple une répartition concentrique, comme illustré. Par exemple, l'ensemble 25 correspond à celui comportant les transducteurs 2 de plus petite taille, disposés au centre de la matrice, l'ensemble 26 à celui comportant les transducteurs 2 de taille intermédiaire, et l'ensemble 27 à celui comportant les transducteurs 2 de plus grande taille, répartis sur la périphérie de la matrice.

Les membranes actives 22 des transducteurs 2 des ensembles 25, 26 et 27 présentent par exemple des rayons de 1000, 1600 et 2200 micromètres, respectivement. La fréquence de porteuse *f* correspondant à une taille de membrane donnée peut être estimée grâce à l'équation suivante, issue de l'article de Nguyen, M. D., et al. "Optimized electrode coverage of membrane actuators based on epitaxial PZT thin films. "(Smart materials and structures 22.8 (2013): 085013.):

$$f = \frac{\lambda_n^2 t}{2\pi r^2} \sqrt{\frac{E}{12\rho(1-\nu)}}$$

avec *E* et *v* le module de Young et le coefficient de Poisson de la membrane, respectivement, $\rho$ sa masse volumique moyenne, *t* son épaisseur et *r* son rayon. $\lambda_n$ est la valeur propre de résonance de la membrane avec *n* le mode de résonance.

Dans l'exemple considéré, la fréquence de porteuse des transducteurs 2 des ensembles 25, 26 et 27 est ainsi approximativement de 107 kHz, 44kHz et 22kHz, respectivement. Suivant ces fréquences, l'effet haptique peut être généré à une distance de l'ordre de 8 cm à 1m.

Les transducteurs de différents ensembles peuvent être disposés au sein d'une même matrice 40 de diverses façons, par exemple de manière généralement concentrique comme illustré à la figure 3, ou bien mélangés aléatoirement ou en respectant d'autres règles de disposition des transducteurs les uns relativement aux autres.

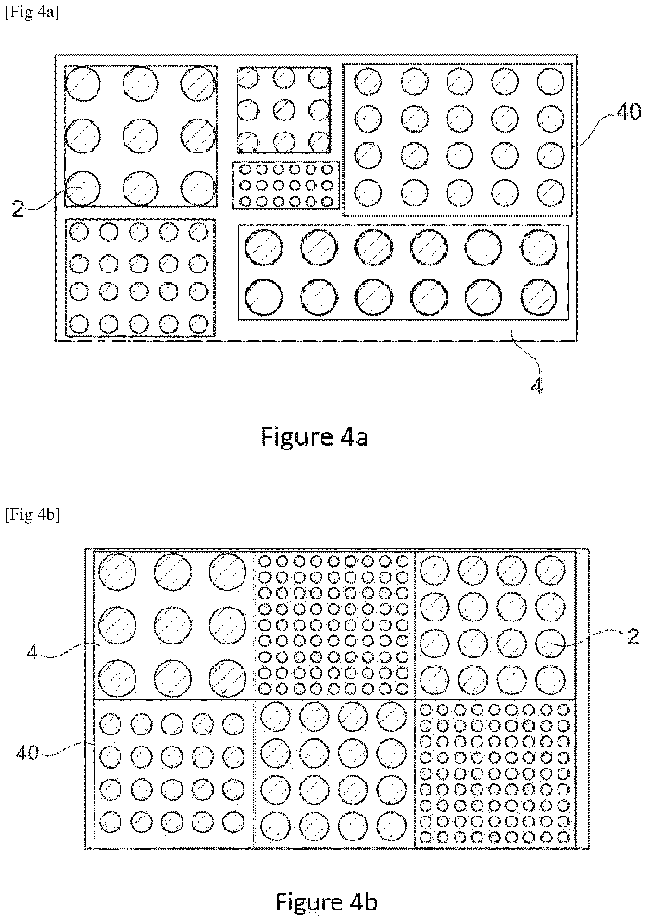

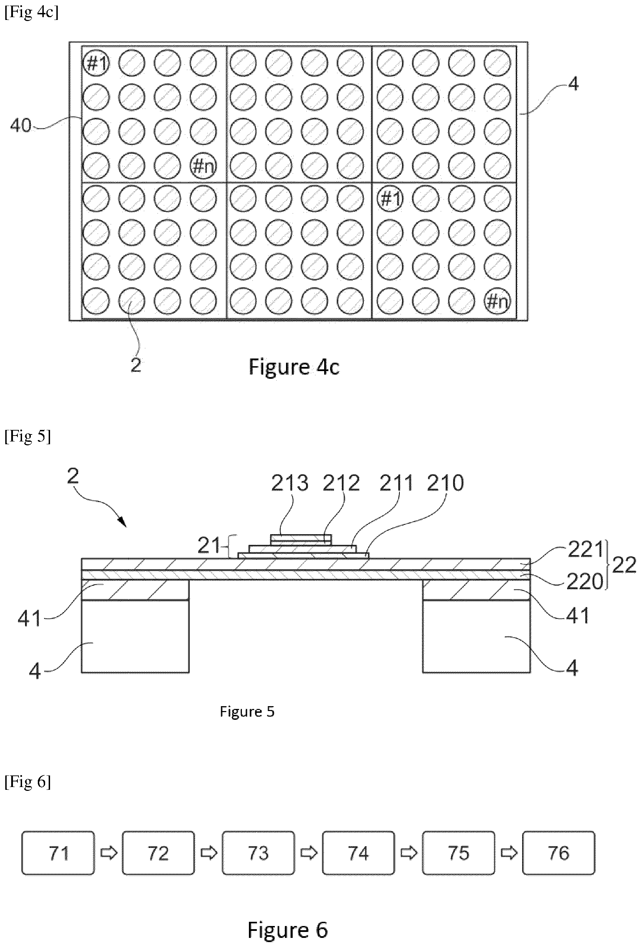

Dans d'autres modes de réalisation, comme illustré par exemple aux figures 4a, 4b et 4c, les ensembles sont disposés sur des matrices respectives distinctes 40 qui sont par exemple regroupées, les matrices 40 étant par exemple assemblées selon un même plan. Les matrices 40 peuvent être de tailles et formes différentes, tel que sur la figure 4a, ou de taille semblable telle que sur la figure 4b. Les membranes 22 des transducteurs 2 de chaque matrice 40 peuvent différer en épaisseur, tel qu'illustré sur la figure 4c. Préférentiellement, les membranes 22 des transducteurs 2 des matrices 40 sont identiques, et notamment les membranes 22 des transducteurs 2 des ensembles 25, 26 et 27 sont identiques. Cela permet de limiter le nombre de membranes nécessaires pour produire des effets haptiques et/ou sonores.

On a représenté à la figure 5 un exemple de réalisation d'un transducteur 2 de l'interface 1. Dans l'exemple considéré, le transducteur 2 est de type piézoélectrique micro-usiné (PMUT) et comprend, comme décrit précédemment, une membrane active 22 fixée sur un support rigide 4 et un actionneur piézoélectrique 21 disposé sur la membrane 22.

Le support rigide 4 est par exemple en silicium. Une couche isolante 41, par exemple en oxyde de silicium, peut être ajoutée entre le support 4 et la membrane 22. La membrane 22 est fixée sur le support uniquement par sa périphérie, sa partie centrale étant libre de se courber.

La membrane 22 est formée d'une ou plusieurs couches constitutives superposées et présente une épaisseur totale par exemple comprise entre 0.5 et 10 $\mu$m. Dans l'exemple considéré, la membrane 22 est composée de deux couches superposées 220 et 221. La couche inférieure 220 est par exemple en poly silicium et d'épaisseur 4 $\mu$m. La couche supérieure 221 est par exemple en oxyde de silicium et d'épaisseur 1,9 $\mu$m. D'autres matériaux peuvent être utilisés pour la membrane 22, notamment à base de silicium monocristallin, ou de nitrure de silicium.

L'actionneur piézoélectrique 21 comprend par exemple quatre couches superposées 210, 211, 212 et 213. La couche 210 est en contact avec la couche supérieure 221 de la membrane 22. La couche 210 est par exemple en platine et constitue l'électrode inférieure de l'actionneur 21. L'électrode supérieure de l'actionneur comprend dans cet exemple une couche 212, par exemple en ruthénium, et une couche conductrice 213, par exemple en or. La couche 211 qui se situe entre les deux électrodes est en matériau piézoélectrique ou ferroélectrique, par exemple de type titano-zirconate de plomb (PZT). Elle peut aussi être en nitrure d'aluminium (AIN), en oxyde de zinc (ZnO) ou tout autre matériau piézoélectrique ou ferroélectrique approprié.

Pour obtenir le transducteur PMUT illustré à la figure 5, on peut mettre en oeuvre un procédé de fabrication comprenant les étapes représentées à la figure 6, et permettant de réaliser simultanément un grand nombre de transducteurs.

A l'étape 71, on dépose une ou plusieurs couche(s), par exemple de 4um d'épaisseur, par exemple en poly silicium et oxyde de silicium, sur la face supérieure d'un substrat rigide 4, par exemple en Silicium, afin de former les membranes actives 22 des transducteurs. Une couche isolante 41 peut être déposée entre le substrat 4 et la première couche de la membrane au préalable.

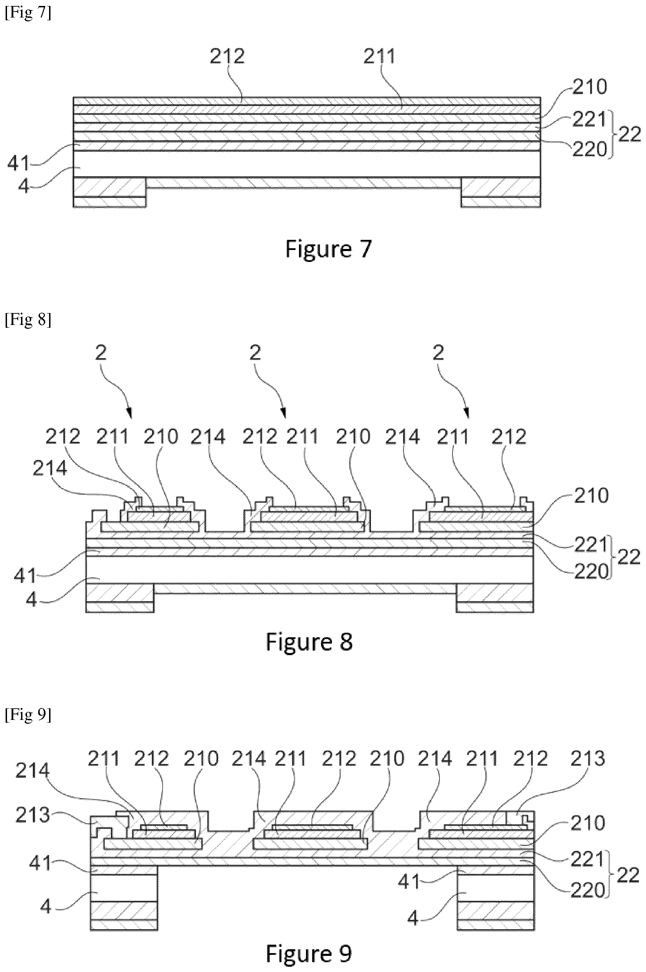

A l'étape 72, on dépose successivement en couche mince les matériaux qui formeront les actionneurs piézoélectriques 21. On commence par exemple par déposer une couche de 100 nm de platine 210 pour former l'électrode inférieure, puis on la recouvre avec une couche 211 de 2um d'un matériau piézoélectrique de type PZT, qui est par la suite elle-même recouverte par une couche mince de 100 nm de ruthénium 212. A la fin de l'étape 72 et comme illustré à la figure 7, on obtient un empilement continu des couches précédemment décrites, à savoir de bas en haut : le support 4, la couche isolante 41, les couches 220 et 221 formant la membrane 22, et les couches 210, 211 et 212 formant l'actionneur piézoélectrique 21.

On forme alors à l'étape 73, et comme illustré à la figure 8, la pluralité de transducteurs sur le support 4 par application de masques de photolithographie et par gravures des couches 210, 211 et 212 constituant l'actionneur piézo-électrique. Cette étape peut en outre comprendre l'application d'une couche isolante de passivation 214, par exemple en oxyde de silicium, et d'une couche conductrice 213, par exemple en or, sur au moins une partie de la couche 212.

A l'étape 74, la face inférieure du support 4 et la couche isolante 41 sont découpées, par exemple via l'application d'un masque puis par gravure, de façon à exposer la face inférieure de la partie centrale de la membrane active 22 de chaque transducteur tel qu'illustré à la figure 9.

On peut ainsi réaliser simultanément sur un même support une pluralité de transducteurs de manière simple. A l'étape 75, le support peut ensuite être découpé afin d'obtenir des matrices 40 de transducteurs de taille souhaitée. On peut jouer sur la taille et l'épaisseur des membranes pour obtenir des transducteurs de fréquences différentes.

A l'étape 76, chaque transducteur est connecté électriquement à une électronique de pilotage grâce, par exemple, à des connexions traversantes 7.

Pour connecter électriquement les transducteurs ainsi obtenus à leur électronique de pilotage, des connecteurs flexibles peuvent être reliés à chacun des transducteurs.

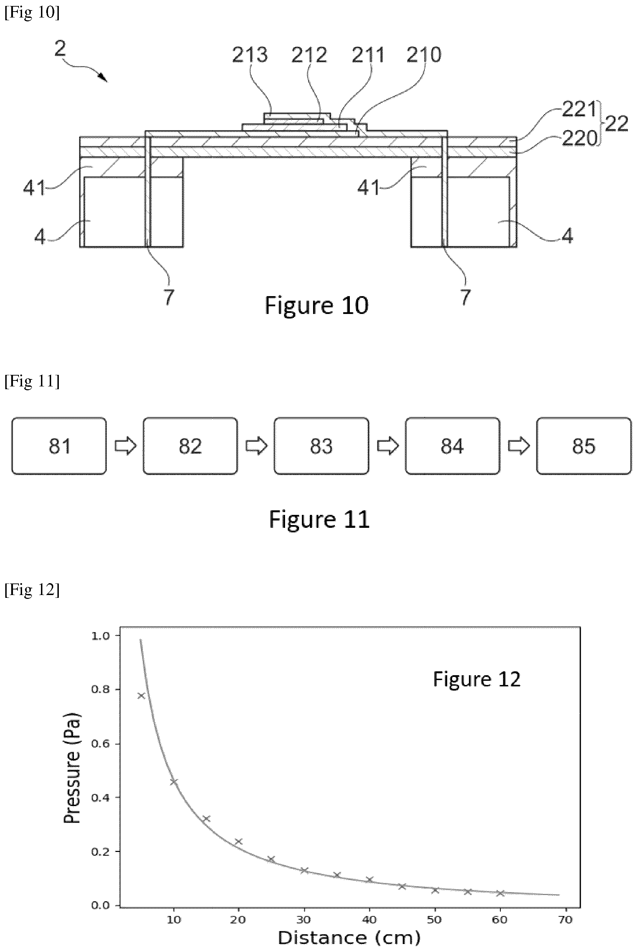

Les matrices 40 ainsi obtenues peuvent ensuite être intégrées à un boîtier et les connecteurs flexibles reliés à l'électronique de pilotage. Alternativement et comme illustré à la figure 10, des connexions traversantes 7 peuvent être utilisées pour amener des contacts électriques sur la face inférieure du support 4. Les matrices 40 de transducteurs peuvent alors être directement intégrées sur l'électronique de pilotage.

Lorsqu'une différence de tension est appliquée entre les électrodes 210 et 213, la couche piézoélectrique 211 peut se déformer sous l'action du champ électrique généré, induisant une déformation de la membrane active 22 et l'émission d'une onde acoustique. A l'inverse, le transducteur 2 ainsi connecté peut agir en récepteur d'onde acoustique, par exemple en tant que système de détection de la surface S sur laquelle l'effet haptique doit être généré et/ou du récepteur R au niveau duquel l'effet sonore doit être généré. Dans ce cas, la réception d'une onde acoustique déforme le couche 211 et donc la membrane 22, entrainant une variation du champ électrique qui peut être traduite par un signal électrique sur les électrodes, mesuré grâce aux connexions électriques 7.

Une interface haptique et sonore 1 selon l'invention, couplée avec un système de détection 5, peut fonctionner selon les étapes décrites à la figure 11.

A l'étape 81, l'interface 1 est par exemple en veille, en l'absence d'un utilisateur dans le champ de détection du système de détection 5. A l'étape 82, le système de détection 5, par exemple réalisé avec une partie des transducteurs 2 ou avec n'importe quel autre système de détection adapté, par exemple une caméra, par exemple optique, détecte la présence d'une surface S et/ou d'un récepteur R d'un utilisateur dans le champ de détection, et localise l'endroit où doivent être générés le ou les effets haptiques et/ou sonores. A l'étape 83, le circuit de commande 3 calcule, à partir d'algorithmes connus de l'Homme du métier, le déphasage à appliquer aux transducteurs et envoie les signaux de commande appropriés 30 pour actionner au moins une partie transducteurs 2 de façon à générer les effets haptiques et/sonores désirés. A l'étape 84, les transducteurs émettent des ondes ultrasonores à des fréquences porteuses différentes, selon les ensembles actionnés, permettant de générer un ou plusieurs effets haptiques et/ou sonores en une ou plusieurs zones focales. A l'étape 85, l'utilisateur se retire du champ de détection et l'interface 1 se remet en veille.

Les fréquences de travail des transducteurs 2 utilisés pour les effets haptiques et sonores peuvent être différentes ou identiques. Si les fréquences sont les mêmes, la matrice 40 comportant les transducteurs 2 utilisés pour les effets haptiques et sonores peut être monolithique et fabriquée en une fois, par exemple suivant le procédé décrit à la figure 6. Si les fréquences sont différentes, la matrice 40 peut également être réalisée monolithiquement suivant le même procédé de réalisation en jouant sur le rayon des membranes 22 des transducteurs 2. Une première matrice 40 comportant les transducteurs 2 utilisés pour les effets haptiques et une deuxième matrice 40 comportant les transducteurs utilisés pour les effets sonores peuvent aussi être assemblées.

Le dimensionnement de la ou des matrices 40 de transducteurs 2 dépend du ou des effets haptiques et/ou sonores désirés.

La pression acoustique unitaire $P$ générée par un transducteur peut être calculée à partir de la surface $S_m$ de sa membrane, de sa fréquence porteuse $f$ et de la distance $d$ à laquelle elle est générée, en utilisant l'équation de la pression acoustique issue d'un piston plan suivante :

$$P = \frac{\sqrt{2}.\pi.\rho.S_m.\epsilon.f^2}{d}$$

Avec $\rho$ la masse volumique moyenne de la membrane et $\varepsilon$ l'amplitude de la vibration.

Dans un exemple de matrice 40, les transducteurs ultrasonores 2 utilisés sont de type PMUT et travaillent à une fréquence de 100kHz. Mais d'autres types de transducteurs peuvent être indifféremment utilisés, par exemple des actionneurs électromagnétiques. Le rayon de la membrane 22 des transducteurs PMUT 2 considérés est de l'ordre de 400 $\mu$m et l'écart entre les membranes 22 des transducteurs 2 est de l'ordre de 300 $\mu$m, ce qui est un écart suffisant pour permettre une solidité de la matrice 40. Pour une fréquence donnée, le rayon d'un transducteur 2 est fonction de la raideur de sa membrane 22, liée à son épaisseur et ses matériaux constitutifs.

Un transducteur PMUT 2 travaillant à 100 kHz alimenté par une tension de 5V permet de générer une pression acoustique de l'ordre de 0.15 Pa à une distance de 30 cm, d'après les mesures illustrées à la figure 12. Il est possible de faire l'hypothèse d'une pression acoustique augmentant linéairement avec la tension jusqu'à une tension maximale de 48 V, correspondant à 1.44 Pa.

Il est connu de l'Homme du métier que le seuil de pression acoustique permettant de ressentir un effet haptique est d'environ 200 Pa. En additionnant linéairement les pressions acoustiques générées pour une tension de 48V, il résulte qu'il faut 139 transducteurs pour obtenir un effet haptique à 30 cm.

Dans cet exemple, afin de générer un effet haptique perceptible tactilement à 30 cm, la matrice 40 a donc une dimension minimale de l'ordre de 1,5*1,5 cm². 

Il est connu de l'Homme du métier que le seuil de perception acoustique permettant de ressentir un effet sonore est d'environ 120 dB.

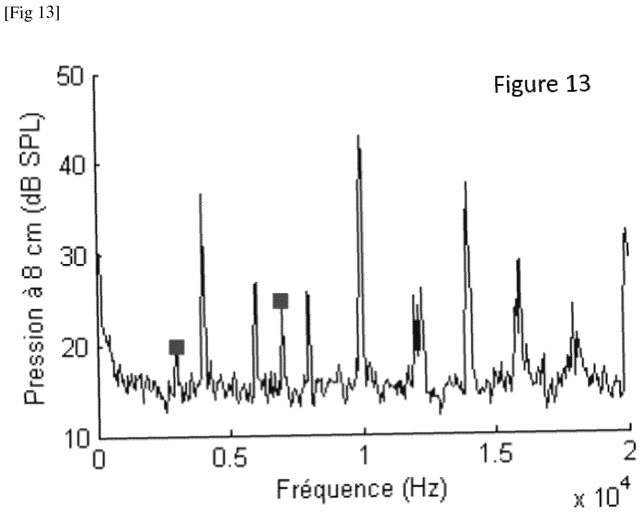

La figure 13 montre que, dans l'exemple considéré, 64 transducteurs PMUT 2 travaillant à 100 kHz permettent de générer une pression de 30 dB à 8 cm. En additionnant linéairement les pressions acoustiques générées, il résulte qu'il faut 256 transducteurs pour générer un effet sonore perceptible à 8 cm, ce qui correspond à une matrice de dimension minimale de l'ordre de 2*2 cm². 

Ainsi, dans l'exemple considéré, l'interface multimodale 1 est constituée au minimum de 395 (139+256) transducteurs 2 pour générer simultanément un effet haptique et un effet sonore.

Néanmoins, il est aussi envisageable de générer séquentiellement les effets haptique et sonore. Dans ce cas, une interface multimodale 1 d'au moins 256 transducteurs 2 est suffisante pour générer les deux effets.

Il est possible d'augmenter le nombre de transducteurs 2 de l'interface 1 pour augmenter l'effet, le nombre d'effets simultanés, et/ou augmenter la distance de travail.

L'interface haptique et sonore 1 peut être intégrée sur un casque de réalité virtuelle, augmentée ou mixte qui génère par exemple une scène, ou une image virtuelle telle qu'une balle. L'utilisateur peut taper avec sa main cette balle et l'interface 1 peut envoyer une information haptique de contact avec la balle. Simultanément ou séquentiellement, avec un décalage imperceptible pour l'utilisateur de l'ordre de plusieurs dizaines de millisecondes, par exemple 100 ms, l'interface 1 peut envoyer une information sonore à l'utilisateur qui entend un son dans la direction de la balle, lui donnant l'impression qu'il entend le bruit de la balle qui a été frappée.

Bien entendu, l'invention n'est pas limitée aux exemples qui viennent d'être décrits.

Les transducteurs peuvent être réalisés autrement que par le procédé de fabrication décrit ci-dessus. Les membranes actives sont par exemple réalisées sur un support en verre ou sur une feuille souple d'un polymère. L'actionneur piézoélectrique peut se trouver au centre de la membrane ou non, sous forme de disque ou d'anneau ou tout autre forme, et être de taille diverse par rapport à la taille de la membrane. Il peut y avoir plusieurs actionneurs piézoélectriques sur une même membrane, par exemple un en son centre et un sur la périphérie. Les transducteurs peuvent être déposés en couche mince ou transférés directement sur la membrane. Comme décrit précédemment, les transducteurs de taille de membrane différente peuvent être disposés sur le support selon toute répartition.

Les ondes ultrasonores dans les exemples considérés se propagent dans l'air, mais tout type de milieu peut être considéré, par exemple un liquide.

Les effets haptiques peuvent être générés de manière à donner l'impression à un utilisateur de toucher différentes textures.

L'interface haptique et sonore 1 peut être reliée à un ou plusieurs système(s) générant un effet visuel, par exemple au moins un écran, miroir ou hologramme.

**Revendications**

1. Interface multimodale haptique, comportant :

   - un circuit de commande (3),
   - une matrice comportant une pluralité de transducteurs ultrasonores (2) reliés audit circuit, le circuit de commande étant configuré pour moduler les signaux (30) envoyés aux transducteurs (2) afin de :
   - générer avec les ondes ultrasonores émises par au moins une partie des transducteurs une pression acoustique détectable tactilement sur une surface (S) d'un utilisateur, en au moins une première zone focale (10), et/ou
   - générer avec les ondes ultrasonores émises par au moins une partie des transducteurs une pression acoustique détectable auditivement par un récepteur auditif (R) de l'utilisateur, en au moins une seconde zone focale (11).

2. Interface multimodale selon la revendication 1, comportant au moins un ensemble de transducteurs agencé pour générer des effets haptiques et des effets sonores.

3. Interface multimodale selon l'une des revendications 1 et 2, comportant au moins deux ensembles de transducteurs ultrasonores, un premier ensemble de transducteurs étant agencé avec le circuit de commande pour générer des effets haptiques et un deuxième ensemble de transducteurs non inclus dans le premier étant agencé pour générer avec le circuit de commande des effets sonores simultanément et/ou successivement aux effets haptiques générés par le premier ensemble.

4. Interface multimodale selon l'une quelconque des revendications précédentes, comportant au moins deux ensembles de transducteurs ultrasonores, les transducteurs d'un premier ensemble et ceux d'un deuxième ensemble ayant des membranes actives (22) identiques.

5. Interface multimodale selon l'une quelconque des revendications précédentes, comportant au moins deux ensembles de transducteurs ultrasonores, les transducteurs d'un premier ensemble et ceux d'un deuxième ensemble étant portés par un même support (4).

6. Interface multimodale selon l'une quelconque des revendications précédentes, comprenant au moins un système de détection (5) configuré pour détecter la position relativement aux transducteurs d'au moins une surface (S) à stimuler tactilement et/ou d'au moins un récepteur auditif à stimuler sonorement, le circuit de commande (3) étant agencé pour contrôler les transducteurs et notamment la position des première et deuxième zones focales en fonction de la position de la surface et/ou du récepteur auditif.

7. Interface multimodale selon l'une quelconque des revendications précédentes, chaque transducteur (2) étant de type piézoélectrique, ferroélectrique, électromagnétique, thermique ou piézoélectrique céramique, de préférence de type piézoélectrique, en particulier de type piézoélectrique micro-usiné (PMUT).

8. Interface multimodale selon l'une quelconque des revendications précédentes, dans laquelle le circuit de commande est configuré pour moduler les signaux (30) envoyés aux transducteurs (2) afin de générer la pression acoustique détectable auditivement par focalisation électronique acoustique.

9. Procédé pour générer une ou plusieurs perceptions tactiles et/ou sonores localisées à distance en utilisant une interface multimodale telle que définie dans l'une quelconque des revendications 1 à 8, comportant la modulation, grâce à un circuit de commande, des signaux de commande envoyés aux transducteurs afin de :

   o générer avec les ondes ultrasonores émises des transducteurs actionnés une pression acoustique détectable tactilement sur une surface (S) d'un utilisateur, en une première zone focale, et/ou
   o générer avec les ondes ultrasonores émises par des transducteurs actionnés une pression acoustique détectable auditivement par un récepteur auditif R de l'utilisateur, en une seconde zone focale.

10. Procédé selon la revendication précédente, comportant les étapes consistant à :

   - Déterminer la ou les position(s) spatiale(s) où générer la perception tactile et/ou sonore,
   - Déterminer les transducteurs à actionner et calculer le déphasage à appliquer à ces transducteurs afin de générer la ou les perception(s) tactile et/ou sonore souhaitées.

[Fig 1A]

Figure 1A

[Fig 1B]

Figure 1B

[Fig 2]

Figure 2

[Fig 3]

Figure 3

[Fig 4a]

Figure 4a

[Fig 4b]

Figure 4b

[Fig 4c]

#1 ... #n ... #1 ... #n

40

4

2

Figure 4c

[Fig 5]

2

213 212 211 210

21

221 22
220

41

41

4

4

Figure 5

[Fig 6]

71 ⇨ 72 ⇨ 73 ⇨ 74 ⇨ 75 ⇨ 76

Figure 6

[Fig 7]

Figure 7

[Fig 8]

Figure 8

[Fig 9]

Figure 9

[Fig 10]

Figure 10

[Fig 11]

Figure 11

[Fig 12]

Figure 12

[Fig 13]

Figure 13

Europäisches
Patentamt

European
Patent Office

Office européen
des brevets

**RAPPORT DE RECHERCHE EUROPEENNE**

Numéro de la demande

EP 24 20 6865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 11 347 312 B1 (WANG PAUL X [US]) 31 mai 2022 (2022-05-31) * alinéas [0013] - [0017], [0021] - [0027]; figures 1-8 * | 1-10 | INV. G06F3/01 |
| A | EP 4 006 698 A1 (COMMISSARIAT ENERGIE ATOMIQUE [FR]) 1 juin 2022 (2022-06-01) * le document en entier * | 1-10 | |
| A | US 2022/016673 A1 (LEE SYLVESTER SPENCER [US] ET AL) 20 janvier 2022 (2022-01-20) * le document en entier * | 1-10 | |
| A | US 2018/151035 A1 (MAALOUF JOHNNY [CA] ET AL) 31 mai 2018 (2018-05-31) * le document en entier * | 1-10 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| Munich | 9 décembre 2024 | Benzina, Amal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 6865

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-12-2024

| Document brevet cité au rapport de recherche | | Date de publication | Membre(s) de la famille de brevet(s) | | Date de publication |
|---|---|---|---|---|---|
| US 11347312 | B1 | 31-05-2022 | AUCUN | | |
| EP 4006698 | A1 | 01-06-2022 | CN | 114546181 A | 27-05-2022 |
| | | | EP | 4006698 A1 | 01-06-2022 |
| | | | FR | 3116630 A1 | 27-05-2022 |
| | | | US | 2022164043 A1 | 26-05-2022 |
| US 2022016673 | A1 | 20-01-2022 | US | 2022016673 A1 | 20-01-2022 |
| | | | US | 2024033779 A1 | 01-02-2024 |
| | | | WO | 2020131020 A1 | 25-06-2020 |
| | | | WO | 2020131145 A1 | 25-06-2020 |
| US 2018151035 | A1 | 31-05-2018 | CN | 108121441 A | 05-06-2018 |
| | | | EP | 3327545 A1 | 30-05-2018 |
| | | | JP | 2018088239 A | 07-06-2018 |
| | | | KR | 20180060959 A | 07-06-2018 |
| | | | US | 2018151035 A1 | 31-05-2018 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180181203 A
- FR 3092680
- FR 3116630
- US 2018151035 A
- US 11347312 B

**Littérature non-brevet citée dans la description**

- **DEJAEGER et al.** Development and characterization of a piezoelectrically actuated MEMS digital loudspeaker. *Proceedings European Conférence on Sensors, Actuators and Microsystems (Eurosensor)*, 2012
- Modélisations multiphysiques, réalisation et expérimentations d'un haut-parleur digital matriciel piézoélectrique MEMS, Acoustique [physics.class-ph. **RÉMY DEJAEGER**. thèse. INSA, 2014
- **HUDIN C** ; **LOZADA J** ; **HAYWARD V.** Localized Tactile Feedback on a Transparent Surface through Time-Reversal Wave Focusing. *IEEE Trans Haptics*, April 2015, vol. 8 (2), 188-98
- Piezoelectric membrane actuator design.. **CASSET, F. et al.** 2011 12th Intl. Conf. on Thermal, Mechanical & Multi-Physics Simulation and Experiments in Microelectronics and Microsystems. IEEE, 2011
- **NGUYEN, M. D. et al.** Optimized electrode coverage of membrane actuators based on epitaxial PZT thin films.. *Smart materials and structures*, 2013, vol. 22 (8), 085013